# EUROPEAN PATENT SPECIFICATION

(11) **EP 0 457 992 B1**
(45) Date of publication and mention of the grant of the patent: **13.09.1995**
(21) Application number: 90314018.4
(22) Date of filing: 20.12.1990
(51) Int. Cl.: A47C 31/10

(54) **Adhesive secured seat cover and method**
Durch Kleben gesicherter Autositzüberzug und Verfahren zur Herstellung
Housse de protection adhésive pour sièges et méthode de fabrication

(30) Priority: 13.08.1990 US 567113; 24.05.1990 US 528559
(43) Date of publication of application: 27.11.1991
(73) Proprietor: CADILLAC PRODUCTS INC., Troy, Michigan 48084 (US)
(72) Inventor: Barnett, Karl Frederick, Bloomfield Hills, Michigan 48013 (US); Barnett, Christopher James, Birmingham, Michigan 48010 (US); Marriott, Donald Peter, Rochester Hills, Michigan 48309 (US)
(74) Representative: Senior, Alan Murray

(56) References cited:
- FR-A- 2 409 727
- US-A- 3 695 692

## Description

### BACKGROUND OF THE INVENTION

This invention relates to seat covers and, more particularly, to temporary disposable seat covers that are secured with an adhesive.

Temporary seat covers are frequently used to protect seats during their manufacturing, shipment or repair. Such seat covers are particularly important in settings such as automobile manufacturing where a seat may be exposed to numerous contaminants from the time the seat is manufactured until it is delivered to a customer. For instance, the manufacturing environment could expose a seat to airborne contaminants such as dust, oil or paint spray. Moreover, once the seat is installed, a number of workers (who may have soiled clothing or hands) must occupy the seat while performing final assembly and test operations and while transporting the vehicle from the factory to the automobile dealership. A temporary seat cover is important to insure that the seat reaches the customer in pristine condition. This increases customer satisfaction and avoids the necessity of subsequent cleaning operations.

Since temporary seat covers are generally disposed of after use, a key requirement for such seat covers is that they are inexpensive. This demands that the seat cover be made of a very low cost material, such as thin plastic sheeting. One drawback with such inexpensive materials is that they are slippery and inherently weak. Consequently, a major problem with conventional temporary seat covers is their tendency to slide on the seat as occupants enter and exit. This can result in the seat cover coming off, or tearing due to excessive forces exerted on the seat cover at weak points. While some prior seat covers have incorporated external straps or cords to secure the seat cover, in general, these solutions are prohibitively expensive or require too much time to install. In most manufacturing environments and in vehicle manufacturing in particular, fast and simple installation is a critical requirement.

FR-A-2 409 727 discloses a typical such prior seat cover and provides the basis for the prior art portion of claim 1 and also for the prior art portion of claim 13 which claims the preferred method of making the seat cover of the invention.

It is an object of the present invention to provide a temporary seat cover that, once secured to the seat, will not easily slide, shift or tear during use.

It is a further object of the present invention to provide a seat cover that is easily and quickly installed and secured to a seat and that does not require external securing means.

As defined in claim 1, the present invention, in its broadest aspect provides a seat cover which has integral flaps which can be used adhesively to join to a layer of the cover to hold it securely to the vehicle seat.

As later described in detail with respect to various embodiments, a temporary seat cover is provided for protecting a seat during manufacturing, shipping or repair operations. The seat cover generally comprises a two-layer flexible member with selected edges sealed together. On one side, the seat cover is slit to form upper and lower pockets for enclosing a seat back and seat bottom respectively. In addition, a flap is cut from the flexible member in such a way that it remains connected to the flexible member at its base. An adhesive means is then attached to one side of the flap or to the seat cover back. Once the seat cover is installed on the seat, the flap may be wrapped around a portion of the seat and adhered to the other side of and of the pockets to secure the seat cover to the seat. The resulting seat cover is inexpensive to manufacture in a single piece, is easily and quickly installed, and secures the seat cover in a way that minimises slippage and tearing during use.

The present invention will become further apparent from the subsequent description and the appended claims, taken in conjunction with the accompanying drawings.

### Brief Description of the Drawings

Figure 1 is a side view of an automotive seat with the temporary seat cover installed in accordance with the present invention.

Figure 2 is a rear view of the automotive seat and seat cover shown in Figure 1.

Figure 3 is a plan view of a portion of a continuous roll of temporary seat covers manufactured in accordance with the present invention.

Figure 4 is a cross-sectional view of the roll of seat covers taken along line 4--4 in Figure 3.

Figure 5 is a cross-sectional view of the roll of seat covers taken along line 5--5 in Figure 3.

Figure 6 is a plan view of a portion of a continous roll of temporary seat covers manufactured in accordance with an alternate embodiment of the present invention.

Figure 7 is a plan view of a portion of a continous roll of temporary seat covers manufactured in accordance with an additional alternate embodiment of the present invention.

Figure 8 is a view of a seat cover in accordance with a further embodiment of the present invention for use with coupe-type seats.

Figure 9 is a side view of an automotive coupe-type seat with the seat cover shown in Figure 8 installed.

Figure 10 is a plan view of an alternate embodiment of a seat cover for use with coupe-type seats.

### DESCRIPTION OF THE PREFERRED EMBODIMENTS

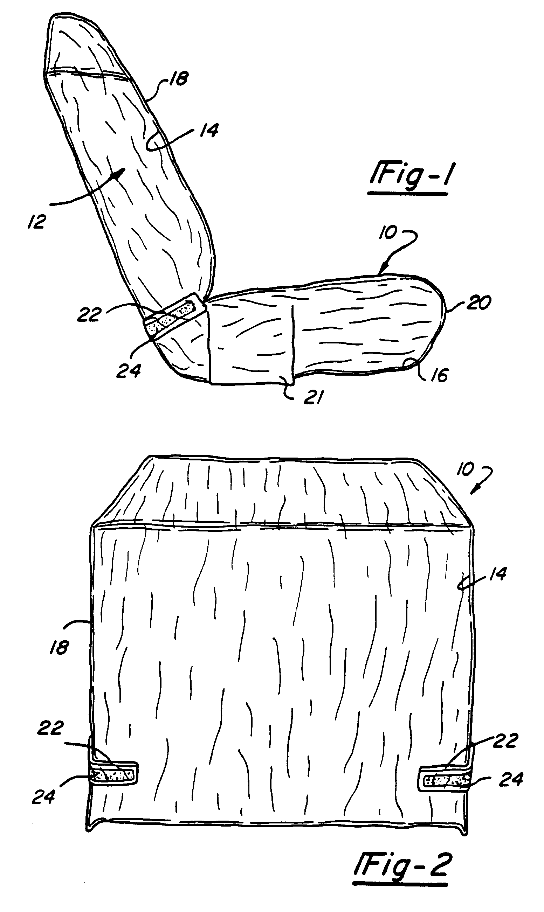

Referring now to Figure 1, an improved temporary seat cover 10 is shown. The seat cover 10 is installed on an automotive seat 12 which comprises an automotive bucket-type seat including a seat back 14 and a seat bottom 16. It will be appreciated that the seat cover 10 in accordance with the present invention can be used with a variety of seats, automotive and non-automotive. The seat cushion 10 includes an upper pocket 18 which substantially encloses the seat back 14 and a lower pocket 20 which encloses the seat bottom 16. Side Flaps 21 hang along the seats of the seat bottom 16 to provide further protection to the seat 12.

Attached to the seat cover 10 is an integral closure tab 22 which is wrapped around the sides of the seat back 14 near the junction of the seat back 14 and seat cushion 16. As better illustrated in Figure 2, a pair of closure tabs 22 are wrapped around both sides of the seat back 14 and attached to the rear of the upper pocket 18 by means of an adhesive 24 attached to the closure tabs 22 or upper pocket 18. In this way, the seat cover 10 is tightly constrained about the base of the seat back 14 to effectively prevent the seat cover 10 from sliding or slipping when sat upon.

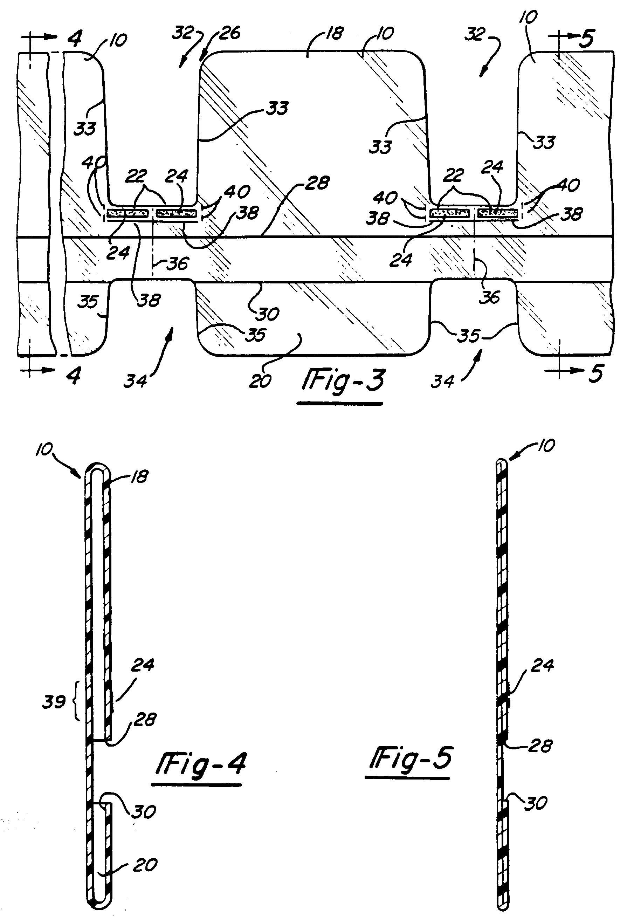

A preferred production version of the seat cover 10 is illustrated in Figures 3-5. Figure 3 illustrates a continuous strip 26 of seat covers 10 which may be mounted on a roll (not shown). Figure 4 and 5 illustrate cross-sections of the continuous strip 26 showing that the seat covers 10 are manufactured in a generally tubular shape. It will be appreciated that the continuous strip 26 of seat covers 10 can be produced in the desired tubular shape by means of conventional plastic processing such as blown extrusion. Once the tubular strip 26 has been created, it is then slit along lines 28 and 30 to create upper pocket 18 and lower pocket 20.

Next, the desired shape for the seat cover 10 is created by cutting out and sealing U-shaped cut-outs 32 and 34 along lines 33 and 35. The sealing and cutting operation for the U-shaped cut-outs 32 and 34 may be accomplished using a conventional hot wire technique to achieve simultaneous cutting and sealing. Also, perforated lines 36 are created between adjacent covers 10 to facilitate separation of adjacent covers 10 from the strip 26 by hand tearing. The hot wire technique may also be employed to create the perforations 36.

Closure tabs 22 are created by cutting and sealing along lines 38. This will create a flap that forms the closure tab 22 once the covers 10 are separated at the perforation lines 36. To permit bonding of closure tab 22 to the upper pocket 18 during installation, an adhesive strip 24 is applied to each closure tab 22. The adhesive strip 24 may be applied in a number of ways. For instance, in the preferred embodiment they consist of sprayed on hot melt acrylic adhesive. A suitable hot melt acrylic adhesive such as HRJ-10848, is manufactured by Schenectady Chemicals of Schenectady, New York. The spray equipment is in registered placement for precise location of the pressure sensitive adhesive. To facilitate the adhesion of the hot melt acrylic adhesive spray, the area where the adhesive 24 is to be sprayed may first be treated with a process such a corona discharge. This will help insure that the adhesive 24 will remain affixed in the proper location and will not stick instead to the back face of the adjacent cover when the strip 26 is rolled up. In this regard, it is important that areas which do not have adhesive applied are not treated with the corona process. For example, area 39 in Figure 4 in particular should be left untreated to prevent adhesive from an adjacent seat cover on the roll from sticking to this area. Also, it should be noted that where it is desired to apply printing to the seat cover corona treatment will likewise facilitate adhesion.

To increase the strength of the closure tabs 22, a pair of seal points 40 are placed near the base of each closure tab 22. It will be appreciated that without seal points 40 the bulk of the forces on the installed and bonded closure tabs 22 will be exerted on a single layer of the seat cover 10. That is, the layer on which the adhesive 24 is applied will receive the most stress. However, with seal points 40 in place, both layers of the seat cover 10 are bonded together near the base of the closure tabs 22. As a result, both layers, instead of a single layer of the seat cover 10 will be supporting forces on the closure tab 22. This reduces the likelihood that the tab or other areas of the seat cover 10 will tear when a person sits on the seat 12.

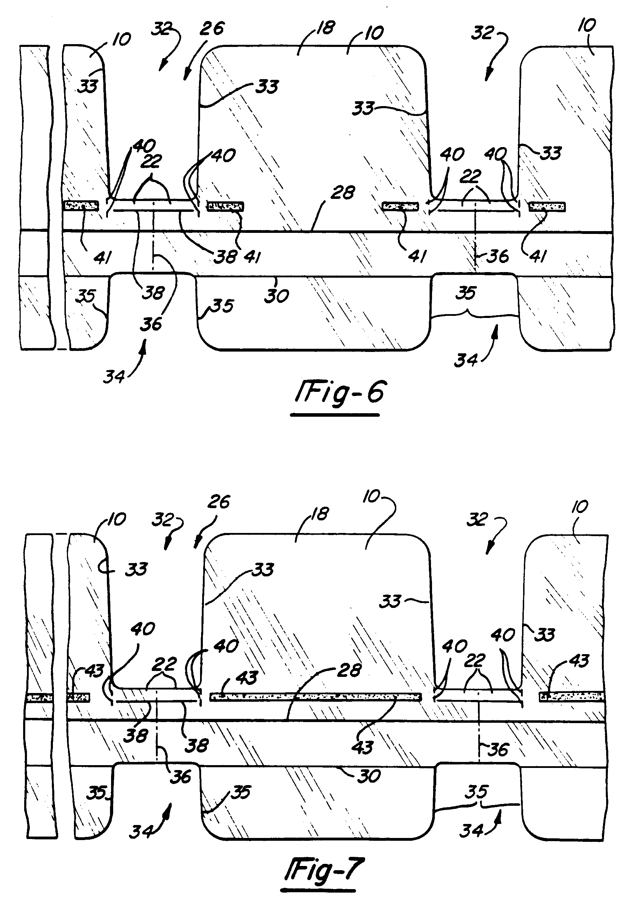

Referring now to Figures 6 & 7, alternative preferred embodiments of the seat cover shown in Figs 1-5 are shown. These embodiments differ in the positioning of the adhesive. In particular, in Figure 6 adhesive 41 is located on the rear surface of the upper pocket 18 instead of on the flaps 22. Placement of the adhesive 41 on the upper pocket 18 has the advantage of ensuring correct placement of the flaps 22 during assembly since the flaps 22 must be installed at the locations of the adhesive 41. In the embodiment shown in Figure 3 it is possible for the flaps 22 to be adhered to an improper location either before or during assembly.

A similar embodiment is shown in Figure 7, with the further modification of the adhesive 43 to extend substantially across the entire upper pocket 18. This embodiment, while having the advantages of the embodiment of Figure 6, also has the further advantage of permitting a wider range of adjustability of the placement of the flaps 22. In addition, greater adjustability permits a seat cover 50 of a given size to be used interchangeably on a wider range of seat sizes.

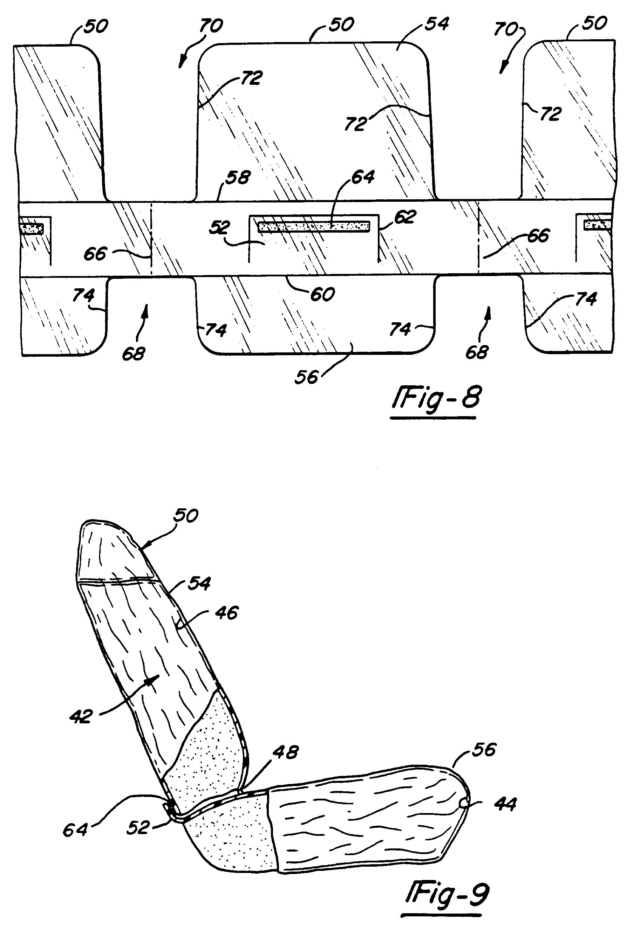

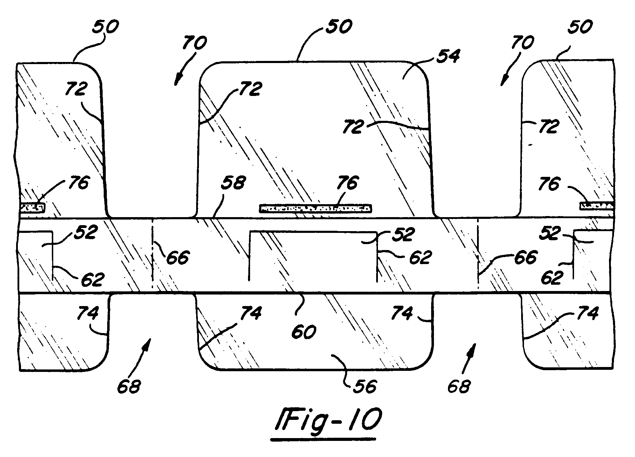

Referring now to Figures 8 & 9 another embodiment of the present invention adapted to be used with coupe type seats is shown. The coupe type seat 42 comprises a seat bottom 44 and seat back 46. In the typical coupe seat 42, the seat back 44 is mounted on a hinge mechanism (not shown) in such a way that it may be folded forward to permit access to a rear storage compartment. A key distinction with the coupe seat 42 is that a significant gap 48 exists between the base of the seat back 46 and the seat bottom 44. In general, the seat cover 50 in accordance with this embodiment of the present invention utilizes a flap 52 that is inserted into this gap 48 between the seat back 46 and the seat bottom 44. The flap 52 may then be pulled upward and bonded to the back of the seat cover 50. Thus, it will be appreciated that the seat cover 50 can be utilized with any seat in which there is sufficient gap 48 between the seat back 46 and the seat bottom 44 to permit flap 52 to be inserted therein.

Seat cover 50 includes an upper pocket 54 for enclosing the seat back 46 and a lower pocket 56 for enclosing the seat bottom 44. Seat cover 50 is manufactured in a manner similar to the seat cover 10 depicted in Figures 3-5 As best seen in Figure 8 the tubular seat cover 50 is slit along lines 58 and 60 to create the upper 54 and lower 56 pockets. Closure tab 52 is formed by cutting the top surface of the cushion 50 along line 62. An adhesive strip 64 is applied to the closure tab 52 in a manner similar to the adhesive strips 24 shown in Figures 1-5. That is, the adhesive is sprayed on with hot melt acrylic, and the area is first treated with a corona discharge process. As viewed in Figure 8, adhesive 64 is placed on the back side of flap 62 to permit attachment to the upper pocket 54 as shown in Figure 9. Seat cover 50 is separated from adjacent seat covers by tearing along a perforated strip 66. In addition, cut out portions 68 & 70 are created by cutting and sealing with a hot wire along lines 72 & 74 as discussed above. It should be noted that the closure tab 52 is made of a single layer of plastic where the previous closure tabs 22 were made of double layers. However, adequate strength is achieved by substantially increasing the width of closure tab 52 to distribute forces over a much larger area and thus insuring adequate strength against tearing.

To install seat cover 50 the installer simply tears the next seat cover off the roll along perforated lines 66, and slips upper pocket 54 over the seat back 46 and the lower pocket 56 over the seat bottom 44. Next, the closure tab 52 is pushed through the gap 48 between the seat back 46 and bottom 44 and closure tab 52 is pulled upward to tighten seat cover 50 and bond the closure tab 52 to the back of the seat cover 50. As a result, the seat cover 50 may be quickly and easily installed. Also, the seat cover 50 will be securely attached to the seat 42 and will not be subject to shifting or tearing by seat occupant due to the location and design of the closure tab 52.

Referring now to Figure 10 there is shown another embodiment of the seat cover 50 wherein adhesive 76 is attached to the back side of upper pocket 54 instead of to the flap 62. As discussed above in connection with Figures 6 & 7, this ensures correct placement of the flap 62. Also, since flap 62 must be pushed through gap 48, this alternate placement of adhesive 76 shown in Fig 10 will prevent sticking of the flap 62 during this insertion procedure. When applied to the seat 42, the seat cover shown in Figure 10 will appear substantially like the one shown in Figure 9 with the subsitution of adhesive 76 for adhesive 64.

## Claims

1. A temporary seat cover comprising: a two-layer flexible member having an upper pocket (18) for enclosing a seat back (14) therein, and a lower pocket (20) for enclosing a seat bottom cushion (16) therein, characterised in that a flap (22) is provided having a base end and a distal end, said flap (22) being connected at its base to a first layer of said flexible member, and an adhesive means (24 or 41) attached to said distal end of said flap (22) or to the second layer of the two-layer flexible member, whereby said flap is adapted to be wrapped around a portion of the seat (12) to overlap and adhere to the said second layer of the two-layer flexible member to secure said seat cover (10) to said seat (12).

2. The seat cover of claim 1, wherein said flap (22) is made of both layers of said two-layer flexible member and has its edges sealed together.

3. The seat cover of claim 2, further comprising seal points (40) wherein said two layers of said flexible member are fused together, said seal points (40) being located near the base of said flap (22), whereby forces pulling on said flap (22) are resisted by both layers of said flexible member at said seal points (40).

4. The seat cover of claim 1, wherein said flap (52) is centrally located on a top layer of said flexible member near the junction of said seat back and bottom, and said flap (52) is adapted to pass between the seat back (40) and bottom (44) to adhere to a bottom layer of said flexible member in use of the seat cover (50).

5. The seat cover of claim 1, 2 or 3, wherein said flap (22) is located near one edge of said flexible member and said flap (22) is adapted to be wrapped around the side of said seat (12) to adhere to the second layer of said flexible member.

6. The seat cover of claim 5, further comprising a second flap (22) substantially identical to said flap (22) but located on an opposite side of said flexible member and adapted to be wrapped around an opposite side of said seat (12).

7. The seat cover of any preceding claim, wherein said flaps (22,52) are generally rectangular in shape.

8. The seat cover of any preceding claim, wherein said two-layer flexible member is formed on a continuous sheet and said seat cover (10) is separable from adjacent seat covers (10) on said continuous sheet by means of a perforated edge (36).

9. The seat cover of any preceding claim, wherein said adhesive (24) is a hot melt acrylic.

10. The seat cover of any preceding claim, wherein said seat flap (22) or second layer has been treated with a corona discharge process before having had said adhesive applied thereto.

11. The seat cover of any preceding claim, wherein said adhesive (24) has been applied by spraying.

12. The seat cover of any preceding claim, wherein said two-layer flexible member has been manufactured in an extruded tubular form.

13. A method of producing temporary seat covers comprising the steps of moulding a continuous plastic tubular member; slitting said tubular member along two parallel longitudinal lines (28,30) to create upper (18) and lower (20) pockets; and cutting and sealing cutouts (34) in said upper and lower pockets in a predetermined shape; characterised in that said tubular member is perforated (at 36) in a lateral direction at regular intervals to facilitate separating each seat cover, each seat cover being as claimed in any preceding claim; in that the flap (22) is cut and sealed in said tubular member; and in that an adhesive is applied either to the upper pocket or on one side of said flap.

14. The method of claim 13, further comprising the steps of sealing (at 40) a strip of said tubular member near the point of attachment of said flap (22), so that two layers of said tubular member are sealed together at said sealed strip.

15. The method of claim 13 or 14, further comprising the steps of cutting and sealing a second flap (22) and applying an adhesive (24) to said second flap.

16. The method of any one of claims 13 to 15, wherein said step of moulding a continuous tubular member is moulded using a blow moulding operation.

17. The method of any one of claims 13 to 16, wherein said adhesive (24) is applied by being sprayed onto said pocket or flap.

## Patentansprüche

1. Schutz-Sitzbezug mit: einem zweischichtigen flexiblen Element mit einer oberen Tasche (18) zum Umschließen einer Sitzlehne (14) und einer unteren Tasche (20) zum Umschließen eines Sitzflächenpolsters (16), dadurch gekennzeichnet, daß eine Lasche (22) vorgesehen ist, die ein Basisende und ein distales Ende aufweist, wobei die Lasche (22) an ihrer Basis mit einer ersten Schicht des flexiblen Elements verbunden ist, und ein Haftmittel (24 oder 41) vorgesehen wird, das an dem distalen Ende der Lasche (22) oder an der zweiten Schicht des zweischichtigen flexiblen Elements angebracht ist, wodurch die Lasche so ausgelegt ist, daß sie so um einen Abschnitt des Sitzes (12) gelegt werden kann, daß sie die zweite Schicht des zweischichtigen flexiblen Elements überlappt und daran haftet, um den Sitzbezug (10) an dem Sitz (12) sicher festzuhalten.

2. Sitzbezug nach Anspruch 1, wobei die Lasche (22) aus beiden Schichten des zweischichtigen flexiblen Elements hergestellt ist und ihre beiden Kanten miteinander versiegelt bzw. verschweißt sind.

3. Sitzbezug nach Anspruch 2, desweiteren mit Versiegelungspunkten (40), an denen die beiden Schichten des flexiblen Elements miteinander verschmolzen sind, wobei sich die Versiegelungspunkte (40) nahe bei der Basis der Lasche (22) befinden, wodurch den Kräften, die an der Lasche (22) ziehen, an den Versiegelungspunkten (40) von beiden Schichten des flexiblen Elements ein Widerstand entgegengesetzt wird.

4. Sitzbezug nach Anspruch 1, wobei die Lasche (52) zentral auf einer oberen Schicht des flexiblen Elements nahe dem Übergangsbereich zwischen Rückenlehne und Sitzfläche angeordnet ist und die Lasche (52) so ausgelegt ist, daß sie zwischen der Rückenlehne (40) und der Sitzfläche (44) durchwandern kann, um an einer unteren Schicht des flexiblen Elements bei der Verwendung des Sitzüberzuges (50) anzuhaften.

5. Sitzbezug nach Anspruch 1, 2 oder 3, bei dem sich die Lasche (22) nahe einer Kante des flexiblen Elements befindet und die Lasche (22) so ausgelegt ist, daß sie um die Seite des Sitzes (12) herumgelegt werden kann, um an der zweiten Schicht des flexiblen Elements anzuhaften.

6. Sitzbezug nach Anspruch 5, desweiteren mit einer zweiten Lasche (22), die im wesentlichen identisch zu der Lasche (22) ist, sich aber auf einer gegenüberliegenden Seite des flexiblen Elements befindet und so ausgelegt ist, daß sie um eine gegenüberliegende Seite des Sitzes (12) geschlungen werden kann.

7. Sitzbezug nach einem der vorhergehenden Ansprüche, wobei die Laschen (22, 52) im allgemeinen eine rechteckige Form aufweisen.

8. Sitzbezug nach einem der vorhergehenden Ansprüche, wobei das zweischichtige flexible Element auf einem Endlosbogen ausgebildet ist und der Sitzbezug (10) von angrenzenden Sitzbezügen (10) auf dem Endlosbogen mit Hilfe einer perforierten Kante (36) abgetrennt werden kann.

9. Sitzbezug nach einem der vorhergehenden Ansprüche, wobei der Klebstoff (24) ein Hot-Melt-Acrylklebstoff ist.

10. Sitzbezug nach einem der vorhergehenden Ansprüche, wobei die Sitzlasche (22) bzw. die zweite Schicht mit einem Glimmentladungsverfahren behandelt worden ist, bevor der Klebstoff darauf aufgebracht worden ist.

11. Sitzbezug nach einem der vorhergehenden Ansprüche, wobei der Klebstoff (24) durch Sprühen aufgebracht worden ist.

12. Sitzbezug nach einem der vorhergehenden Ansprüche, wobei das zweischichtige flexible Element in einer extrudierten schlauchartigen Form hergestellt worden ist.

13. Verfahren zur Herstellung der Schutz-Sitzbezüge, mit den Schritten des Formens eines schlauchförmigen Kunststoffendloselements, des Längsschneiden des schlauchförmigen Elements entlang zweier paralleler Längslinien (28, 30), um obere (18) und untere (20) Taschen zu schaffen, und des Schneidens und Versiegelns von Ausschnitten (34) in den oberen und unteren Taschen in einer vorbestimmten Form, dadurch gekennzeichnet, daß das schlauchförmige Element in einer seitlichen Richtung in regelmäßigen Abständen (bei 36) perforiert ist, um das Abtrennen jedes einzelnen Sitzbezugs zu erleichtern, wobei jeder Sitzbezug von der Art ist, die in den vorhergehenden Ansprüchen beansprucht worden ist, daß die Lasche (22) in dem schlauchförmigen Element ausgeschnitten und versiegelt wird, und daß ein Klebstoff entweder auf die obere Tasche oder auf einer Seite der Lasche aufgebracht wird.

14. Verfahren nach Anspruch 13, desweiteren mit den Schritten des Versiegeln (bei 40) eines Streifens des schlauchförmigen Elements nahe dem Befestigungspunkt der Lasche (22), so daß zwei Schichten des schlauchförmigen Elements an dem versiegelten Streifen miteinander versiegelt werden.

15. Verfahren nach Anspruch 13 oder 14, desweiteren mit den Schritten des Ausschneidens und Versiegelns einer zweiten Lasche (22) und des Aufbringens eines Klebstoffs (24) auf die zweite Lasche.

16. Verfahren nach einem der Ansprüche 13 bis 15, wobei der Schritt des Formens eines schlauchförmigen Endloselements unter Einsatz eines Blasformvorgangs durchgeführt wird.

17. Verfahren nach einem der Ansprüche 13 bis 16, wobei der Klebstoff (24) dadurch aufgebracht wird, daß er auf die Tasche oder die Lasche aufgesprüht wird.

## Revendications

1. Housse de siège temporaire comportant : un élément flexible à deux couches possédant une poche supérieure (18) pour en recouvrir un dossier de siège (14), et une poche inférieure (20) pour en recouvrir un coussin de siège (16), caractérisé en ce qu'un rabat (22) est prévu possédant une extrémité de base et une extrémité distale, ledit rabat (22) étant relié à sa base à une première couche dudit élément flexible, et des moyens adhésifs (24 ou 41) attachés à ladite extrémité distale dudit rabat (22) ou à la seconde couche de l'élément flexible à deux couches, grâce auxquels ledit rabat est adapté pour être enroulé autour d une partie du siège (12) à recouvrir et adhérer à ladite seconde couche de l'élément flexible à deux couches pour fixer ladite housse (10) audit siège (12).

2. Housse de siège selon la revendication 1, caractérisée en ce que ledit rabat (22) est constitué de deux couches dudit élément flexible à deux couches et a ses bords scellés l'un à l'autre.

3. Housse de siège selon la revendication 2, comportant en outre des points de scellement (40) auxquels lesdites deux couches dudit élément flexible sont fondues ensemble, lesdits points de scellement (40) étant situés près de la base dudit rabat (22), grâce auxquels les deux couches dudit élément flexible auxdits points de scellement (40) résistent aux forces de traction sur ledit rabat (22).

4. Housse de siège selon la revendication 1, caractérisée en ce que ledit rabat (52) est situé centralement sur la couche supérieure dudit élément flexible près du raccordement desdits dossier et coussin de siège, et ledit rabat (52) est adapté pour passer entre le dossier (40) et le coussin (44) du siège pour adhérer à une couche inférieure dudit élément flexible lors de l'utilisation de la housse de siège (50).

5. Housse de siège selon la revendication 1, 2 ou 3, caractérisée en ce que ledit rabat (22) est situé près d'un bord dudit élément flexible et ledit rabat (22) est conçu pour être enroulé autour du côté dudit siège (12) pour adhérer à la seconde couche dudit élément flexible.

6. Housse de siège selon la revendication 5, comportant en outre un second rabat (22) sensiblement identique audit rabat (22), mais situé sur un côté opposé dudit élément flexible et conçu pour être enroulé autour d'un côté opposé dudit siège (12).

7. Housse de siège selon l'une quelconque des revendications précédentes, caractérisée en ce que lesdits rabats (22, 52) sont généralement de forme rectangulaire.

8. Housse de siège selon l'une quelconque des revendications précédentes, caractérisée en ce que ledit élément flexible à deux couches est formé sur une feuille continue et ladite housse de siège (10) est séparable desdites housses de siège adjacentes (10) sur ladite feuille continue au moyen d'un bord perforé (36).

9. Housse de siège selon l'une quelconque des revendications précédentes, caractérisée en ce ledit adhésif (24) est un acrylique fusible à chaud.

10. Housse de siège selon l'une quelconque des revendications précédentes, caractérisée en ce que ledit rabat de siège (22) ou la seconde couche a été traité par un processus de décharge corona avant que ledit adhésif lui ait été appliqué.

11. Housse de siège selon l'une quelconque des revendications précédentes, caractérisée en ce que ledit adhésif (24) a été appliqué par pulvérisation.

12. Housse de siège selon l'une quelconque des revendications précédentes, caractérisée en ce que ledit élément flexible à deux couches a été fabriqué en une gaine tubulaire extrudée.

13. Procédé de fabrication de housses de siège temporaires comprenant les étapes de moulage d'un élément tubulaire plastique continu; de séparation dudit élément tubulaire le long de deux lignes longitudinales parallèles (28, 30) pour créer des poches supérieure (18) et inférieure (20); et de coupe et de scellement des parties découpées (34) dans lesdites poches supérieure et inférieure en une forme prédéterminée; caractérisé en ce que ledit élément tubulaire est perforé (en 36) dans une direction latérale à des intervalles réguliers pour faciliter la séparation de chaque housse de siège, chaque housse de siège étant telle que revendiquée selon l'une quelconque des revendications précédentes; en ce que le rabat (22) est coupé et scellé dans ledit élément tubulaire; et en ce qu'un adhésif est appliqué, soit à la poche supérieure, soit sur un côté dudit rabat.

14. Procédé selon la revendication 13, comprenant en outre les étapes de scellement (en 40) d'une bande dudit élément tubulaire près du point d'attache dudit rabat (22), de sorte que les deux couches dudit élément tubulaire sont scellés ensemble à ladite bande scellée.

15. Procédé selon la revendication 13 ou 14, comprenant en outre les étapes de coupe et de scellement d'un second rabat (22) et d'application d'un adhésif (24) audit second rabat.

16. Procédé selon l'une quelconque des revendications 13 à 15, caractérisé en ce que ladite étape de façonnage d'un élément tubulaire continu est effectuée en utilisant une opération de moulage par soufflage.

17. Procédé selon l'une quelconque des revendications 13 à 16, caractérisé en ce que ledit adhésif (24) est appliqué par pulvérisation sur ladite poche ou rabat.
